Europäisches Patentamt

European Patent Office

Office européen des brevets

(11) Veröffentlichungsnummer: **0 193 143 B1**

# EUROPÄISCHE PATENTSCHRIFT

(45) Veröffentlichungstag der Patentschrift: **06.05.92**

(51) Int. Cl.⁵: **H04B 1/66**

(21) Anmeldenummer: **86102329.9**

(22) Anmeldetag: **22.02.86**

(54) **Verfahren zur Übertragung eines Audiosignals.**

(30) Priorität: **27.02.85 DE 3506912**

(43) Veröffentlichungstag der Anmeldung:
**03.09.86 Patentblatt 86/36**

(45) Bekanntmachung des Hinweises auf die
Patenterteilung:
**06.05.92 Patentblatt 92/19**

(84) Benannte Vertragsstaaten:
**AT BE CH DE FR GB IT LI LU NL SE**

(56) Entgegenhaltungen:
**WO-A-81/02234**
**WO-A-83/03935**
**DE-A- 3 102 822**
**US-A- 4 330 689**

**ICASSP 82 PROCEEDINGS, IEEE INTERNA-
TIONAL CONFERENCE ON ACOUSTICS, SPE-
ECH AND SIGNAL PROCESSING, Paris, 3.-5.
Mai 1982, Band 3, Seiten 1696-1699, IEEE,
New York, US; K. ANNAMALAI et al.: "An
adaptive transform coding system with short
primary blocklengths and frequency domain
quantization using feedback adaptation"**

(73) Patentinhaber: **TELEFUNKEN Fernseh und
Rundfunk GmbH
Göttinger Chaussee 76
W-3000 Hannover 91(DE)**

(72) Erfinder: **Krahé, Detlef, Dipl.-Ing.
Kommandantenstrasse 60
W-4100 Duisburg 1(DE)**

(74) Vertreter: **Einsel, Robert, Dipl.-Ing.
TELEFUNKEN Fernseh und Rundfunk GmbH
Göttinger Chaussee 76
W-3000 Hannover 91(DE)**

## Beschreibung

Bei der Übertragung eines Audiosignals z.B. bei der Rundfunkübertragung, Kabelübertragung, Satelliten-Strecken und Aufzeichnungsgeräten, ist es aus der WO 81/02234 und WO 83/03935 bekannt, das analoge Audiosignal in ein digitales Audiosignal mit einer bestimmten Auflösung (Bits pro Abtastwert) umzuwandeln, in dieser Form zu übertragen und bei der Wiedergabe wieder in ein analoges Signal umzusetzen. Durch die digitale Übertragung wird insbesondere bei der Wiedergabe ein größerer Störabstand erreicht.

In der WO 81/02234 ist weiterhin offenbart, daß vor der Übertragung das Signal in ein das Kurzzeitspektrum darstellendes Signal (A(f)) umgewandelt wird und Anteile dieses Signals auf Basis psychoakustischer Gesetzmäßigkeiten (Physiologischen Eigenschaften des menschlichen Gehörs) bei der Kodierung (Spektrums-Gewichtungs-Stufe 3 und Datenreduktions-Stufe B) des zu übertragenden analogen Signals in ihrer Darstellungsgenauigkeit verschieden gewichtet werden.

Die für die Übertragung eines solchen Signals erforderliche Bandbreite ist im wesentlichen bestimmt durch die Zahl der zu übertragenden Abtastwerte pro Zeiteinheit sowie durch die Auflösung (Bits pro Abtastwert).

In der Praxis besteht die Forderung, die für die Übertragung notwendige Bandbreite möglichst klein zu halten, um mit einen schmalbandigen Kanal auszukommen oder um über einen vorhandenen Kanal möglichst viele Audiosignale gleichzeitig übertragen zu können. Die erforderliche Bandbreite läßt sich an sich verringern durch eine Reduzierung der Abtastwerte oder der Anzahl der Bits pro Abtastwert. Diese Maßnahme hat aber in der Regel eine Verschlechterung bei der Wiedergabe zufolge.

Der Erfindung liegt die Aufgabe zugrunde, ein Verfahren zur Übertragung eines digitalen Audiosignals zu schaffen, das mit einer geringeren mittleren Bitrate pro Abtastwert auskommt, ohne daß bei der Wiedergabe die Qualität merkbar beeinflußt wird.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgenden Erkenntnissen und Überlegungen. Das digitale Audiosignal im Zeitbereich, das somit zeitlich nacheinander die einzelnen Abtastwerte des analogen Signales darstellt, wird in zeitlich aufeinanderfolgenden Abschnitten in ein Kurzzeit-Spektrum transformiert, welches jeweils für die Kurzzeit, z.B. 20 ms, die Spektralkomponenten des Signales darstellt. In dem Kurzzeit-Spektrum lassen sich aufgrund psychoakustischer Erkenntnisse im allgemeinen Komponenten, die vom Hörer nicht wahrgenommen werden, also im nachrichtentechnischen Sinn irrelevant sind, besser auffinden, als im Zeitbereich. Deshalb werden derartige Komponenten erfindungsgemäß bei der Übertragung weniger gewichtet oder ganz weggelassen. Durch diese Maßnahme kann bei der Übertragung ein beträchtlicher Teil der an sich notwendigen Bits entfallen, so daß die mittlere Bitrate für eine bestimmte Anzahl von Abtastwerten beträchtlich verringert werden kann.

Derartige irrelevante Komponenten des Spektrums sind z.B. Komponenten, die eine bestimmte Amplitude relativ zu einer im Spektrum naheliegenden Maximal amplitude nicht überschreiten. Vorzugsweise können solche Komponenten bei der Übertragung ohne bemerkbare Beeinträchtigung der Wiedergabequalität weggelassen werden. Derartige Komponenten werden nämlich aufgrund psychoakustischer Gesetzmäßigkeiten durch einen sogenannten Verdeckungseffekt vom Hörer nicht wahrgenommen. Für einen derartigen Verdeckungseffekt sind die zeitliche Lage zwischen den Komponenten sowie ihre gegenseitige Frequenz- und Amplitudenlage entscheidend.

Da für den Verdeckungseffekt gewisse Zeitkonstanten maßgeblich sind, wird das Signal durch Zeitfenster (engl. window) in zeitlich aufeinanderfolgende Blöcke mit einer Dauer in der Größenordnung von 20 ms aufgeteilt, da innerhalb eines derartigen Zeitraumes die Verdeckungsschwellen oder Mithörschwellen nicht wesentlich abfallen. Jeweils das Signal eines derartigen Blockes wird dann in das Kurzzeit-Spektrum transformiert und bei der Codierung auf irrelevante Anteile hin untersucht.

Das Gehör bildet Frequenzbänder, sogenannte Gruppen, die bei dem Verdeckungseffekt eine wesentliche Rolle spielen. Die Aufteilung in Frequenzgruppen und die Verdeckung sind bekannt und beschrieben auf Seite 46 ff in E. Zwicher, Psychoakustik, Springer-Verlag, Berlin Heidelberg New York 1982. Jede dieser Frequenzgruppen wird bei der Codierung einzeln ausgewertet und auf irrelevante Komponenten hin untersucht. Die Frequenzauflösung ist dabei so fein, daß die schmalste Frequenzgruppe mit einer Breite von etwa 100 Hz noch erfaßt wird. Für die Umwandlung des Signals aus dem Zeitbereich in dem Frequenzbereich wird vorzugsweise eine FourierTransformation, z.B. eine sogenannte Fast Fourier Transformation angewendet.

Weitere wesentliche Merkmale und Vorteile der erfindungsgemäßen Lösung ergeben sich aus dem Ausführungsbeispiel, das im folgenden anhand der Zeichnung erläutert wird. Darin zeigen:

Fig. 1     den zeitlichen Ablauf des erfindungsgemäßen Verfahrens,

Fig. 2     die Fensterung des Signales zur Erzielung der aufeinanderfolgenden Blöcke,

Fig. 3 bei der Fensterung angewendete Amplituden-Kennlinien,

Fig. 4 Aufteilung des Frequenzbandes des Kurzzeit-Spektrums in einzelne Frequenzbereiche und die Amplitudenauswertung der Komponenten und

Fig. 5 eine zusätzliche Behandlung des Signales für einen speziellen Signalinhalt.

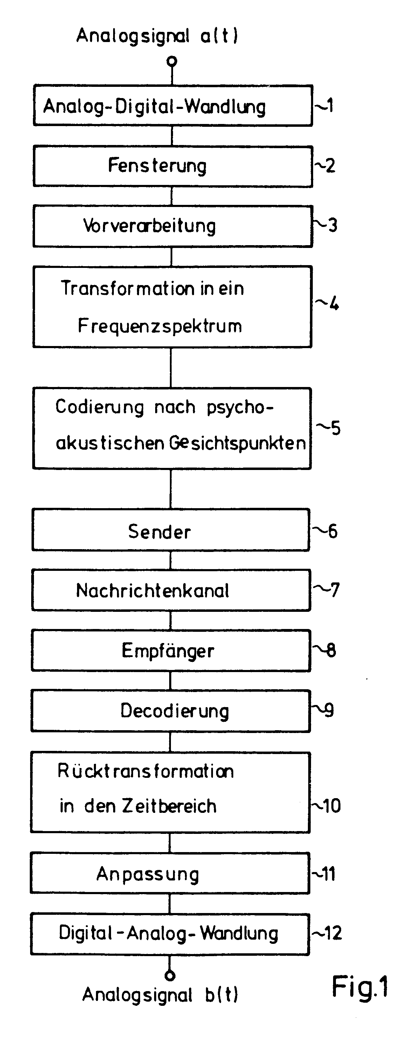

In Figur 1 wird das Analog-Signal a(t), das ein Audiosignal wie z.B. Sprache oder Musik darstellt, in dem Analog/Digital-Wandler 1 in ein entsprechendes digitales Audiosignal umgewandelt. In der Stufe 2 erfolgt durch zeitlich aufeinanderfolgende und überlappende Zeitfenster eine sogenannte Fensterung dieses Signales. Das Signal wird dabei in zeitlich aufeinanderfolgende Blöcke mit je einer Dauer von 20 ms aufgeteilt, derart, daß jeweils das Signal eines Blockes für sich getrennt weiter bearbeitet werden kann. In der Stufe 3 erfolgt eine Vorverarbeitung des Signales, deren Bedeutung später erläutert wird. In der Stufe 4 wird jeweils das digitale Signal eines Zeitfensters oder eines Blockes durch eine Transformation in ein Frequenz-Spektrum umgesetzt. Am Ausgang der Stufe 4 steht also während der zeitlich aufeinanderfolgenden Blöcke jeweils ein Signal, das für die Dauer eines Zeitfensters oder Blockes die Spektralkomponenten des Signals über das gesamte Frequenzband darstellt. Die Stufe 4 bewirkt also die Umsetzung des Signals im Zeitbereich in das das Spektrum darstellende Signal im Frequenzbereich.

Das Signal von der Stufe 4 gelangt zum Coder 5. Hier erfolgt eine Codierung nach psychoakustischen Gesichtspunkten. Das bedeutet, daß Spektralkomponenten, die bei der Wiedergabe insbesondere aufgrund von Verdeckungseffekten ohnehin nicht wahrgenommen werden, bei der Codierung geringer gewichtet oder weggelassen werden. Eine derartige Verarbeitung des Kurzzeit-Spektrums ist möglich z.B. mit Hilfe eines Rechners.

Das derart codierte Signal gelangt über den Sender 6 zum Nachrichtenkanal 7. Durch die erzielte Verringerung der mittleren Bitrate kann dieser Nachrichtenkanal entsprechend schmalbandig bemessen werden. Auf den Nachrichtenkanal 7 folgt der Empfänger 8, der im wesentlichen die zum Sender inversen Funktionen ausführt. Das Signal gelangt zunächst zu einem Decoder 9, der entsprechend dem Coder 5 die Decodierung bewirkt. In der Stufe 10 wird das so gewonnene, das Spektrum-darstellende Signal im Frequenzbereich wieder in ein digitales Signal im Zeitbereich umgesetzt. In der Stufe 11 wird das Signal wieder zu einem einheitlichen kontinuierlichen digitalen Signal zusammengesetzt und die Vorverarbeitung der Stufe 3 berücksichtigt. Dann wird das Signal dem Digital/Analog-Wandler 12 zugeführt. Der Wandler 12 liefert wieder das Analogsignal b(t). Dieses Signal ist mit dem Signal a(t) nicht identisch, weil im Coder 5 bei der Codierung Spektral-Komponenten unterschiedlich gewichtet oder unterdrückt wurden. Der Unterschied zwischen den Analogsignalen b(t) und a(t) ist aber so, daß er bei der Wiedergabe vom Hörer nicht bemerkt wird. In dem Signal wird also lediglich Irrelevanz, für den Hörer unhörbare Information, beseitigt, um die notwendige Bitrate bei der Übertragung über den Nachrichtenkanal 7 zu verringern, speziell wird der Entscheidungsgehalt verringert.

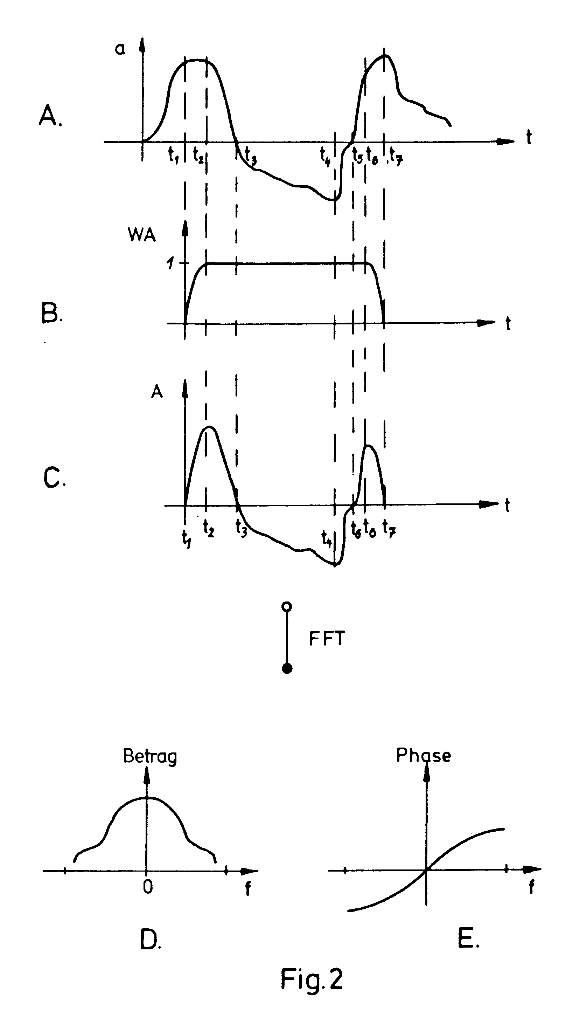

Figur 2 A - C zeigen die Fensterung des Signales in der Stufe 2. Das Signal a(t) wird mit einem Zeitfenster mit der Amplituden-Kennlinie WA von t1 - t7 ausgewertet, d.h. die Signalwerte des Signals a(t) gemäß Figur 2 A werden mit den Werten der Kennlinie WA gemäß Figur 2 B multipliziert. Die Kennlinie hat von t1 - t2 einen über eine Viertelperiode sinusförmigen und von t6 - t7 einen über eine Viertelperiode cosinusförmigen Verlauf und dazwischen von t2 - t6 den konstanten Wert 1. Der stetige Verlauf von t1 - t2 und t6 - t7 ist notwendig, da bei einer derartigen Aufteilung in zeitlich aufeinanderfolgende Blöcke, der sogenannten Fensterung, ein Sprung zwischen Null und einem endlichen Wert bei einer Fourier Transformation ein sehr breites Frequenzspektrum erzeugen würde. Durch die Multiplikation des Signals a(t) mit der Kennlinie WA entsteht das Signal A gemäß Figur 2 C, das somit in den Zeiträumen t1 - t2 und t6 - t7 in der Amplitude verzerrt ist. Diese Fensterung, d.h. zeitselektive Auswertung, die in Figur 1 in der Stufe 2 erfolgt, wird in Figur 2 A - C anhand analoger Signale dargestellt. In Wirklichkeit sind das Signal a(t) und WA digitale Signale, so daß von t1 - t7 jeweils digitale Signalwerte miteinander multipliziert werden.

Jeweils das Signal eines Zeitfensters t1 - t7, d.h. eines Blockes, wird gemäß Figur 1 In der Stufe 4 in das Kurzzeit-Spektrum umgewandelt. Figur 2 D zeigt den Verlauf der Amplitude über der Frequenz f und Figur 2 E den Verlauf der Phase über der Frequenz f für ein derartiges Signal. Auf der Empfängerseite erfolgt der in den Figuren 2 A - E dargestellte Verlauf in umgekehrter Reihenfolge. Die Amplitude und die Phase werden als digitale Signale empfangen und mit Hilfe einer Inversen Fast Fourier Transformation und einer Digital/Analog-Wandlung wieder in ein analoges Signal b(t) umgesetzt.

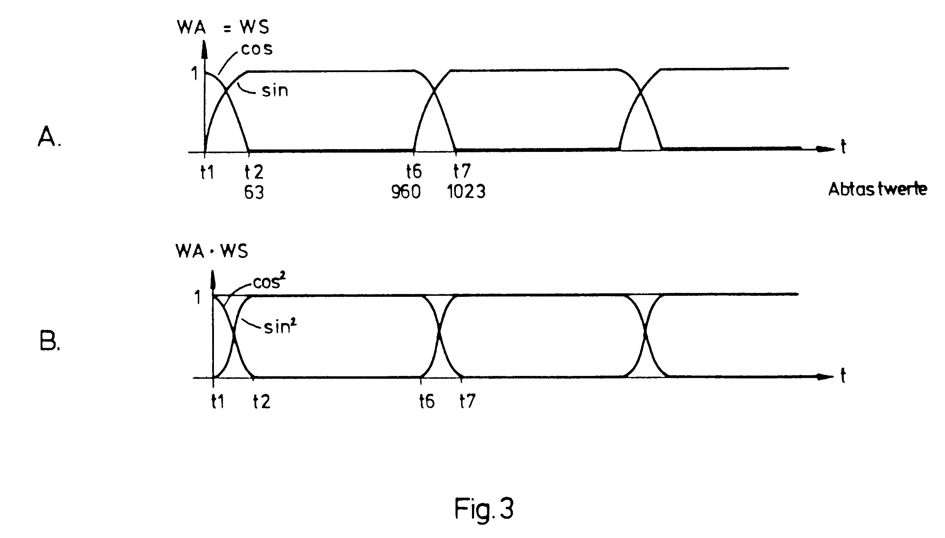

Figur 3 zeigt die Amplituden-Kennlinien für die aufeinanderfolgenden Zeitfenster bei auf der Sendeseite und auf der Empfangsseite. Die Zeitfenster auf der Sendeseite in der Stufe 2 haben den Verlauf WA (A = Analyse) gemäß Figur 3 A. t1 - t2 und t6 - t7 sind Überlappungszeiträume, in denen zwei Zeitfenster wirksam sind. Ein Zeitfenster erstreckt sich über 1024 Abtastwerte, wobei die Überlappung etwa 64 Abtastwerte, das sind 6,25 % der Dauer des Zeitfensters beträgt. Die in Figur 3 A dargestellte Amplituden-Kennlinie gilt in gleicher Weise für die Empfangsseite und wird in der Stufe 11 realisiert (WS = Window Synthese). In der Zeit t2 - t6 durchläuft das Signal ohne Amplitudenbeeinflussung, also mit dem Faktor 1, den in Figur 1 dargestellten Weg. Ein Abtastwert während des Überlappungszeitraumes t1 - t2 wird zunächst in der Stufe 2 mit dem Sinus multipliziert. Da die gleiche Kurve auf der Empfangsseite in der Stufe 11 wirksam ist, wird dieser Abtastwert insgesamt mit $\sin^2 (x)$ multipliziert, was eine Abschwächung der Amplitude dieses Abtastwertes mit dem Faktor $\sin^2 (x)$ bedeuten würde. Während der Zeit t1 - t2 ist aber zusätzlich die abfallende, cosinusförmige Flanke des vorangehenden Zeitfensters wirksam, so daß derselbe Abtastwert durch die cosinusförmige Flanke insgesamt mit $\cos^2 (x)$ multipliziert wird. Wegen der linearen Überlagerung der beiden Signale und der mathematischen Beziehung

$$\sin^2 (x) + \cos^2 (x) = 1$$

ergibt sich somit auch während der Überlappungszeiträume der konstante Amplitudenfaktor 1. Dies ist in Figur 3 B durch die obere waagerechte Linie in den Überlappungszeiträumen t1 - t2 und t6 - t7 dargestellt. Insgesamt ergibt sich also ständig für das Signal der Amplituden-Übertragungswert 1, so daß keine Amplitudenverfälschung des Signales auftritt.

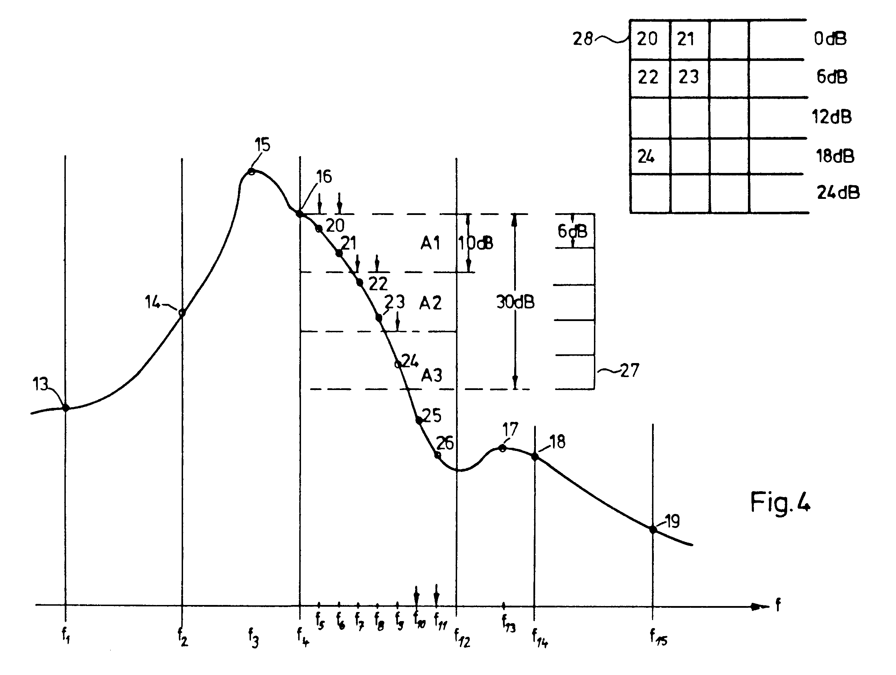

Figur 4 zeigt den Amplitudenverlauf der Spektrallinien eines Kurzzeit-Frequenzspektrums, wie es am Ausgang der Stufe 4 in Figur 1 steht. Das gesamte Frequenzband des Kurzzeit-Spektrums f1 - f15 ist in eine Vielzahl von Frequenzgruppen f1 - f2, f2 - f4, f4 - f12, f12 - f14 und f14 - f15 aufgeteilt. In den einzelnen Frequenzgruppen werden die Spektrallinien nach psychoakustischen Gesichtspunkten untersucht und gewichtet. Nur die dominanten Amplitudenwerte werden übertragen, irrelevante Amplitudenwerte werden weniger gewichtet oder unterdrückt. Das absolute Maximum 15 des gesamten Frequenzbandes wird zunächst als absoluter Wert mit 12 - 16 Bit übertragen. Die Maxima 14,16,17,18 der übrigen Frequenzgruppen werden mit einer Genauigkeit von 8 Bit übertragen, und zwar in ihrer relativen Lage zum absoluten Maximum 15. Die übrigen Werte 20 - 26 der Frequenzgruppe f4 - f12 werden ihrerseits auf den Maximalwert 16 bezogen, d.h. ihre Abweichung vom Maximalwert 16 wird übertragen. Hierzu ist der Amplitudenbereich ausgehend vom Maximum 16 in drei Bereiche A1, A2, A3 mit je 10 dB und einem Bereich A4 für den Rest aufgeteilt. Jeweils In einem Amplitudenbereich liegende Signalwerte 16,20,21 bzw. 22,23 bzw. 24 bzw. 25,26 werden als ein einheitlicher Wert übertragen. Zwischen den Werten 16,20,21 bzw. 22,23 bzw. 25,26 wird also nicht unterschieden. Die Amplitudenwerte 25,26 bei den Frequenzen f10,f11, die den Wert von 30 dB unterhalb des Maximum 16 unterschreiten, werden zu Null gesetzt. Die Phase der Werte 25,26 wird nicht übertragen. Diese Spektralkomponenten wären wegen ihrer dichten Lage zum Wert 16 und ihrer geringen Amplitude aufgrund des Verdekkungseffektes ohnehin nicht mehr wahrnehmbar. In der Praxis wird das gesamte Frequenzband f1 - f15 in 26 Frequenzgruppen aufgeteilt, von denen in Figur 4 zur Vereinfachung nur 5 dargestellt sind. Durch die Aufteilung in die Amplitudenbereiche A1, A2, A3, A4 genügen für die Übertragung der Amplitudenwerte 20 - 26 relativ zum Maximum 16 insgesamt 2 Bit. Für jeden übertragenen Amplitudenwert, der in den Bereichen A1 - A3 liegt, werden 2 Bit für den dazugehörigen Phasenwert übertragen.

Durch die grobe Quantisierung der Amplituden- und Phasenwerte mit 2 Bit wird bereits eine erhebliche Reduktion der zur Übertragung erforderlichen Datenmenge vorgenommen. Durch den Wegfall von Komponenten, nämlich der Phasenwerte für die Amplitudenwerte 25,26 in der Frequenzgruppe f4 - f12, werden bei der Übertragung aber zusätzlich Bits eingespart. Diese freigewordenen Bits können zur Übertragung einer feineren Amplitudeneinteilung in den Bereichen A1 - A3 verwendet werden. Hierzu wird beispielsweise jeder Bereich A1 - A3 in zwei Bereiche von je 5 dB aufgeteilt. Dabei wird jedem Frequenzwert 20 - 24 ein Bit zugeordnet, das anzeigt, ob der Amplitudenwert, z.B. 20,21 innerhalb der ersten 5 dB oder der zweiten 5 dB unterhalb des Maximum 16 liegt. Die Zuordnung dieser Bits geschieht aufgrund einer Tabelle 28, die senderseitig erstellt wird und empfängerseitig rekonstruierbar ist. Dazu wird über den gesamten Verlauf des Frequenzspektrums gemäß Figur 4 ein Raster 27 mit einer Einteilung in Stufen von 6 dB gelegt. Die Amplitudenwerte 20 - 24 werden also diesem Raster zugeordnet. Die Tabelle 28 ordnet jedem Amplitudenwert 20 - 24 eine bestimmte Lage zum Maximum 16 zu. Die Tabelle 28 beginnt mit dem niedrigsten Frequenzwert und zeigt anhand der Zeile die Lage jeweils zu dem Maximum des entsprechenden Frequenzbereiches an.

Stehen weitere freie Bits zur Verfügung, so wird eine Aufteilung der 5 dB Bereiche in 2.5 dB Bereiche vorgenommen. Die Aufteilung läßt sich beliebig fortsetzen.Die Einsparung von Bits und Verwendung dieser Bits für eine Verfeinerung der Auflösung wird als adaptive Quantisierung bezeichnet.

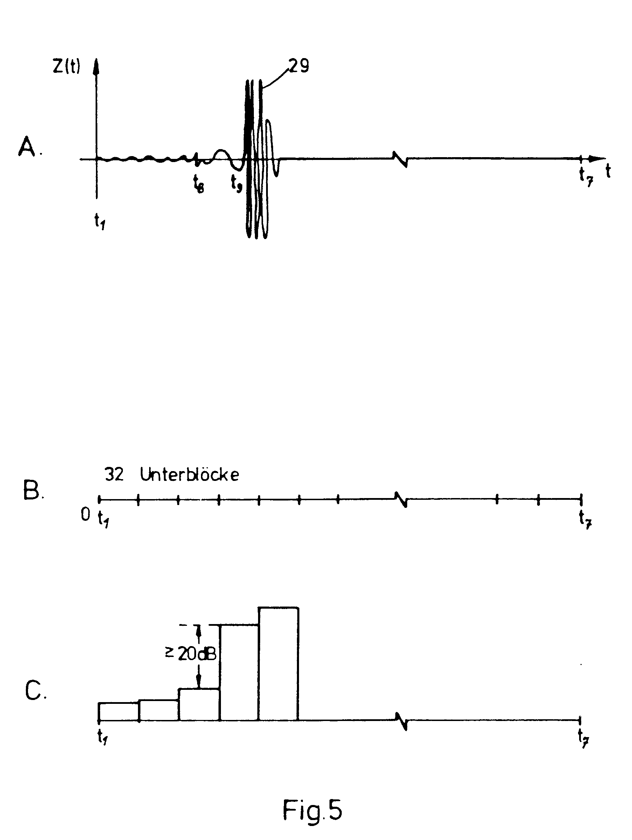

Figur 5 zeigt die Vorverarbeitung eines plötzlichen Schallereignisses 29, das innerhalb eines Zeitfensters t1 - t7 im Zeitpunkt t9 auftritt. Ein solches Schallereignis kann z.B. ein Triangelanschlag sein. Die beschriebene Vorverarbeitung erfolgt in Figur 1 in der Stufe 3. Dem Schallereignis 29 geht noch ein Vorschwinger zwischen t8 und t9 voraus, der aber durch eine Vorverdeckung nicht hörbar ist. Bei der Umwandlung in das Frequenzspektrum in der Stufe 4 in Figur 1 entsteht jeweils ein Signal im Frequenzbereich, das die Spektralverteilung im Fenster t1 - t7 angibt. Da bei diesem Signal die Zuordnung von Spektrallinien zu einzelnen Zeitpunkten innerhalb eines Zeitfensters nicht mehr gegeben ist, würde das Ereignis 29 über das gesamte Zeitfenster t1 - t7 gemittelt also quasi verschmiert. Dadurch kann eine hörbare Verfälschung eintreten.

Zur Vermeidung dieses noch denkbaren Fehlers ist ein Zeitfenster t1 - t7 oder auch Block in 32 Unterblöcke aufgeteilt. Die Amplituden der einzelnen Unterblöcke werden ermittelt. Sobald ein Amplitudensprung zwischen zwei Unterblöcken von mehr als 20 dB auftritt, in Figur 5 bedingt durch das Ereignis 29, wird eine zusätzliche Maßnahme ausgelöst. Diese besteht darin, daß das Signal vor dem Amplitudensprung durch ein Kompanderverfahren auf der Sendeseite in der Amplitude angehoben und auf der Empfängerseite wieder entsprechend abgesenkt wird. Dadurch werden die genannten Fehler durch die Verschmierung des kurzzeitigen Ereignisses über das ganze Zeitfenster verringert.

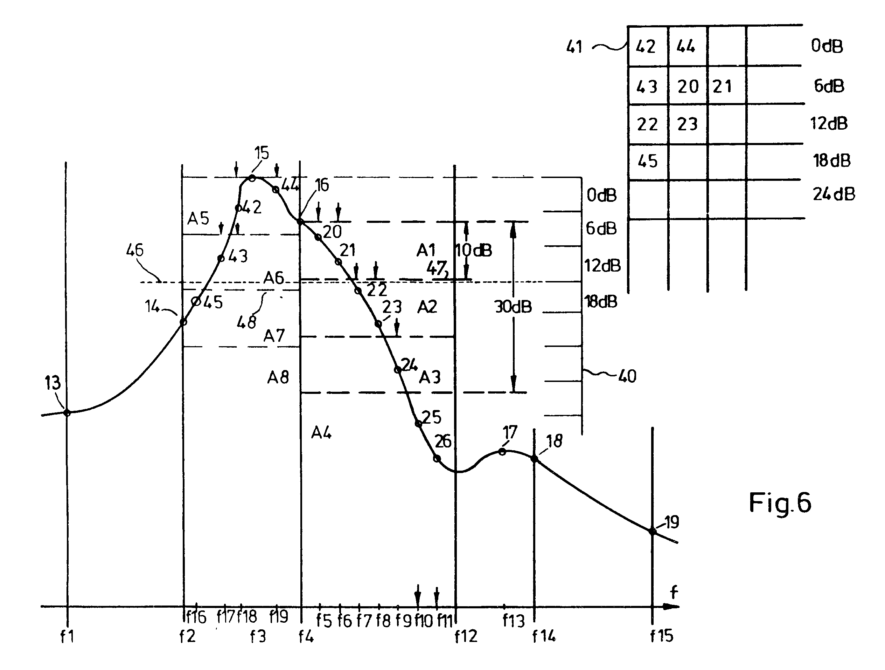

Fig. 6 zeigt eine Alternative zur Übertragung feinerer Amplitudeneinteilungen. Ein Gitter 40 wird über das Frequenzspektrum gelegt. Die oberste Grenze dieser Tabelle schließt mit dem absoluten Maximum 15 ab. Das Gitter 40 weist maximal sechzehn 6 dB Stufungen auf und erstreckt sich somit über einen Bereich von 96 dB. Augrund dieses Gitters 40 wird eine Tabelle 41 erstellt. Die Tabelle wird empfängerseitig erstellt und ist senderseitig rekonstruierbar. Das heißt, daß die Lage der Werte 42,44,43,20, 21,22,23 und 45 in der Tabelle rekonstruierbar ist. Die Tabelle zeigt mit Hilfe eines Bits (0 oder 1) an, ob ein zugehöriger Wert im 5 dB Bereich oder im 6 - 10 dB Bereich der Bereiche A1 - A3, A5 - A7 liegt. Zur feineren Amplitudeneinteilung wird also nur ein Bit für einen Wert übertragen. Für den Wert 20 wird eine 0 übertragen, um anzuzeigen, daß der Wert 20 in dem 0 - 5 dB Bereich von A1 liegt. Die Werte 42 und 44 werden der 0 dB Zeile zugeordnet, die Werte 43,20,21 der 6 dB Zeile, die Werte 22,23 der 12 dB Zeile, der Wert 45 der 18 dB Zeile. Die zu den Werten gehörenden Bits werden zeilenweise mit der 0 dB Zeile beginnend gemäß Tabelle 41 übertragen. Die Übertragungszeit für alle Frequenzspektren ist gleich. Je nachdem, wieviele Bits durch die grobe Quantisierung der Amplituden- und Phasenwerte eingespart werden, umso mehr Bits können aus der Tabelle 41 übertragen werden. Das heißt, daß Bits aus der ersten Zeile 0 dB mit einer höheren Wahrscheinlichkeit als Bits aus den folgenden Zeilen übertragen werden. Die punktierte Linie 46 legt die Grenze zwischen den Linien 47 und 48. Das Bit zum Wert 23 wird mit größerer Wahrscheinlichkeit übertragen als das Bit zum Wert 45, obwohl der Betrag des Wertes 45 größer als der Betrag des Wertes 23 ist.

**Patentansprüche**

1.  Verfahren zur Übertragung eines Audiosignals, bei dem das analoge Signal in ein digitales Signal umgewandelt, vor der Übertragung in ein das Kurzzeitspektrum darstellendes Signal umgesetzt und das gesamte Frequenzband in mehrere Frequenzgruppen aufgeteilt wird, Signalteile in den Frequenzgruppen auf Basis psychoakustischer Gesetzmäßigkeiten bei der Codierung des zu übertragenden Signals in ihrer Darstellungsgenauigkeit verschieden gewichtet werden, das codierte Signal übertragen, nach der Übertragung decodiert, rücktransformiert und wieder in ein analoges Signal umgesetzt wird, **dadurch gekennzeichnet**, daß der Wert des absoluten Betragsmaximus des gesamten Frequenzbandes als absolute Größe und für die Betragsmaxima der übrigen Frequenzgruppen vom jeweiligen transformierten Betragswerte in Frequenzgruppen vom jeweiligen Betragsmaximum aus oberhalb einer Schwelle in Wertebereiche aufgeteilt werden und die im gleichen Wertebereich liegenden Betragswerte als gleicher Wert übertragen werden, daß Betragswerte unterhalb der Schwelle zu Null gesetzt werden und für die Übertragung bisher nicht benötigte, freie Bits zur feineren Unterteilung der Wertebereiche ausgenutzt werden.

2.  Verfahren nach Anspruch 1, **dadurch gekennzeichnet**, daß die Umwandlung durch eine Fourier-Transformation (FT) erfolgt.

3.  Verfahren nach Anspruch 2, **dadurch gekennzeichnet**, daß die Transformation eine Fast Fourier Transformation (FFT) ist.

4.  Verfahren nach Anspruch 1, **dadurch gekennzeichnet**, daß die Kurzzeit in der Größenordnung von 20 ms liegt.

5. Verfahren nach Anspruch 1, **dadurch gekennzeichnet**, daß Anteile des Signals bei der Codierung geringer gewichtet oder unterdrückt werden.

6. Verfahren nach Anspruch 1, **dadurch gekennzeichnet**, daß Anteile des Signals mit abnehmender Amplitude geringer gewichtet werden.

7. Verfahren nach Anspruch 1, **dadurch gekennzeichnet**, daß Anteile des Signals unterhalb einer bestimmten Amplitude bei der Codierung unterdrückt werden (25,26 in Fig. 4).

8. Verfahren nach Anspruch 1, **dadurch gekennzeichnet**, daß Anteile des Signals in Abhängigkeit von ihrer Amplitude und ihrem Frequenzabstand zu verdeckenden Spektralkomponenten größerer Amplitude geringer gewichtet oder unterdrückt werden.

9. Verfahren nach Anspruch 1, **dadurch gekennzeichnet**, daß das Signal durch Zeitfenster (t1 - t7) in zeitlich aufeinanderfolgende Blöcke aufgeteilt wird, die je in eine das Kurzzeit-Spektrum darstellende Signalfolge umgewandelt werden.

10. Verfahren nach Anspruch 9, **dadurch gekennzeichnet**, daß die Zeitfenster einander zeitlich überlappen.

11. Verfahren nach Anspruch 10, **dadurch gekennzeichnet**, daß die Überlappungszeit (t1 - t2; t6 - t7) in der Größenordnung von 5 - 8 %, z.B. 6,25 % der Dauer eines Zeitfensters liegt.

12. Verfahren nach Anspruch 9, **dadurch gekennzeichnet**, daß die Amplituden-Kennlinie (WA, WS) der Zeitfenster auf der Sende- und Empfangsseite identisch ist (Fig. 3).

13. Verfahren nach Anspruch 9, **dadurch gekennzeichnet**, daß die Amplituden-Kennlinie (WA, WS) der Blöcke während der Überlappungszeit (t1 - t2; t6 - t7) einen stetig ansteigenden bzw. abfallenden Verlauf hat.

14. Verfahren nach Anspruch 12 und/oder 13, **dadurch gekennzeichnet**, daß der Verlauf der Amplituden-Kennlinie (WA, WS) während der Überlappungszeit so bemessen ist, daß während dieser Zeit die Summe aus den Produkten der Amplituden-Kennlinie (WA, WS) über Sende- und Empfangsseite = 1 ist.

15. Verfahren nach Anspruch 14, **dadurch gekennzeichnet**, daß die abfallende Flanke der Amplituden-Kennlinie am Ende eines Zeitfensters einen cosinusförmigen Verlauf und die ansteigende Flanke der Kennlinie zu Beginn des Zeitfensters einen sinusförmigen Verlauf hat.

16. Verfahren nach Anspruch 1, **dadurch gekennzeichnet**, daß jeweils die Werte der Amplituden-Maxima (14, 15, 16, 17, 18) einer Frequenzgruppe übertragen werden (Fig. 4).

17. Verfahren nach Anspruch 9, **dadurch gekennzeichnet**, daß ein Block jeweils in mehrere (32) Unterblöcke aufgeteilt wird und jeweils dann, wenn von einem Unterblock zum nächsten ein Amplitudensprung oberhalb eines bestimmten Wertes (29 dB) auftritt, die Amplitudenwerte in den zeitlich vorausgehenden Unterblökken für die Übertragung mit einem Kompandersystem angehoben werden (Fig. 5).

18. Verfahren nach Anspruch 2, **dadurch gekennzeichnet**, daß das Spektrum nach Betrag und Phase dargestellt wird.

19. Verfahren zur Übertragung eines Audiosignals, bei dem das analoge Signal in ein digitales Signal umgewandelt, vor der Übertragung in ein das Kurzzeitspektrum darstellendes Signal umgesetzt wird, wobei das gesamte Frequenzband in mehrere Frequenzgruppen aufgeteilt wird, Signalteile in den Frequenzgruppen auf Basis psychoakustischer Gesetzmäßigkeiten bei der Codierung des zu übertragenden Signals in ihrer Darstellungsgenauigkeit verschieden gewichtet werden, das codierte Signal übertragen, und nach der Übertragung decodiert, rücktransformiert und wieder in ein analoges Signal umgesetzt wird, **dadurch gekennzeichnet**, daß die transformierten Betragswerte in Frequenzgruppen vom jeweiligen Betragsmaximum aus oberhalb einer Schwelle im Wertbereiche aufgeteilt werden und die im gleichen Wertebereich liegenenden Betragswerte als gleicher Wert übertragen werden, und daß Betragswerte unterhalb der Schwelle zu Null gesetzt werden.

20. Verfahren nach Anspruch 19, **dadurch gekennzeichnet**, daß die Unterteilung der Wertebereiche von der Anzahl der zur Verfügung stehenden freien Bits abhängt.

## Claims

1. Method for transmitting an audio signal, in which the analog signal is converted into a digital signal, is transformed prior to the transmission into a signal representing the short-time spectrum, and the whole frequency band is divided up into a plurality of frequency groups, signal components in the frequency groups are weighted differently in their representational accuracy on the basis of psychoacoustic laws for the coding of the signal to be transmitted, the code signal is transmitted, after the transmission decoded, inverse-transformed and converted again into an analog signal, characterised in that the value of the absolute maximum amount of the whole frequency band as an absolute quantity for the maximum magnitudes of the remaining frequency groups are divided up into value ranges from the respective transformed magnitude value in frequency groups starting from the respective maximum magnitude above a threshold and the magnitude values lying in the same value range are transmitted as the same value, that magnitude values below the threshold are set as zero and free bits not required so far for the tramsmission are used for the more detailed subdivision of the value ranges.

2. Method according to claim 1, **characterised in that** the transformation is carried out by a Fourier transform (FT).

3. Method according to claim 2, **characterised in that** the transformation is a Fast Fourier transform (FFT).

4. Method according to claim 1, **characterised in that** the short time lies in the order of magnitude of 20 ms.

5. Method according to claim 1, **characterised in that** components of the signal are weighted less strongly or suppressed for the coding.

6. Method according to claim 1, **characterised in that** components of the signal with decreasing amplitude are weighted less strongly.

7. Method according to claim 1, **characterised in that** components of the signal below a certain amplitude are suppressed for the coding (25, 26 in Fig. 4).

8. Method according to claim 1, **characterised in that** components of the signal are weighted less strongly or suppressed as a function of their amplitude and their frequency spacing from covering spectral components of greater amplitude.

9. Method according to claim 1, **characterised in that** the signal is divided up by time windows (t1 - t7) into blocks succeeding one another in time which are each transformed into a signal sequence representing the short-time spectrum.

10. Method according to claim 9, **characterised in that** the time windows overlap one another in time.

11. Method according to claim 10, **characterised in that** the overlapping time (t1 - t2; t6 - t7) lies in the order of magnitude of 5 - 8%, e.g. 6.25% of the duration of one time window.

12. Method according to claim 9, **characterised in that** the amplitude characteristic curve (WA, WS) of the time windows is identical on the transmission and the reception side (Fig. 3).

13. Method according to claim 9, **characterised in that** the amplitude characteristic curve (WA, WS) of the blocks has a continuously rising or descending shape during the overlapping time (t1 - t2; t6 - t7).

14. Method according to claim 12 and/or 13, **characterised in that** the shape of the amplitude characteristic curve (WA, WS) during the overlapping time is proportioned so that during this time the sum of the products of the amplitude characteristic curve (WA, WS) over transmission side and reception side equals 1.

15. Method according to claim 14, **characterised in that** the descending slope of the amplitude characteristic curve at the end of a time window has a cosinusoidal shape and the rising slope of the characteristic curve at the beginning of the time window has a sinusoidal shape.

16. Method according to claim 1, **characterised in that** the values of the amplitude maxima (14, 15, 16, 17, 18) of a particular frequency group are transmitted (Fig. 4).

17. Method according to claim 9, **characterised in that** each individual block is divided up into a plurality (32) of sub-blocks and whenever an amplitude jump above a specific value (29 dB) occurs from one sub-block to the next, the amplitude values in the sub-blocks coming before in time are raised for the transmission by means of a compander system (Fig. 5).

18. Method according to claim 2, **characterised in that** the spectrum is represented in magnitude and phase.

19. Method for transmitting an audio signal, in which the analog signal is converted into a digital signal, is transformed prior to the transmission into a signal representing the short-time spectrum, in which the whole frequency band is divided up into a plurality of frequency groups, signal components in the frequency groups are weighted differently in their representational accuracy on the basis of psychoacoustic laws for the coding of the signal to be transmitted, the code signal is transmitted, and after the transmission decoded, inverse-transformed and converted again into an analog signal, **characterised in that** the transformed magnitude values are divided up into frequency groups starting from the respective maximum magnitude above a threshold in the value range and the magnitude values lying in the same value range are transmitted as the same value, and that magnitude values below the threshold are set as zero.

20. Method according to claim 19, **characterised in that** the subdivision of the value ranges depends on the number of free bits available.

**Revendications**

1. Procédé pour la transmission d'un signal son dans lequel le signal analogique est transformé en un signal numérique, est transformé avant transmission en un signal qui représente le spectre de courte durée et l'ensemble de la bande de fréquence est réparti en plusieurs groupes de fréquence, des fractions de signal dans les groupes de fréquence sont pondérées différemment quant à l'exactitude de leur représentation, sur la base de lois générales pyschoacoustiques, lors du codage du signal à transmettre et dans lequel le signal codé est transmis, décodé, retransformé et transformé à nouveau en signal analogique après transmission, **caractérisé en ce** que la valeur du maximum absolu de l'ensemble de la bande de fréquence comme grandeur absolue pour les maxima des autres groupes de fréquence de la quantité respectivement transformée en groupes de fréquence à partir du maximum respectif au-dessus d'un seuil est répartie en zones de valeur et que les quantités qui se trouvent dans la même zone de valeur sont transmises comme valeur égale, que les quantités au-dessous du seuil sont mises à zéro et que les bits libres qui n'ont pas été requis pour la transmission jusqu'à présent, sont utilisés pour une graduation plus fine des zones de valeur.

2. Procédé selon la revendication 1, **caractérisé en ce** que la transformation se fait par une transformation de Fourier.

3. Procédé selon la revendication 2, **caractérisé en ce** que la transformation est une transformation accélérée de Fourier.

4. Procédé selon la revendication 1, **caractérisé en ce** que la courte durée est de l'ordre de 20 ms.

5. Procédé selon la revendication 1, **caractérisé en ce** que des fractions du signal sont moins pondérées ou sont supprimées lors du codage.

6. Procédé selon la revendication 1, **caractérisé en ce** que des fractions du signal à amplitude plus faible sont moins pondérées.

7. Procédé selon la revendication 1, **caractérisé en ce** que des fractions du signal au-dessous d'une certaine amplitude sont supprimées lors du codage (25. 26 dans la figure 4).

8. Procédé selon la revendication 1, **caractérisé en ce** que des fractions du signal sont moins pondérées ou sont supprimées en fonction de leur amplitude et de leur écart de fréquence par rapport à des composantes spectrales à masquer d'amplitude plus forte.

9. Procédé selon la revendication 1, **caractérisé en ce** que le signal est réparti par des fenêtres de temps (t1 - t7) en blocs qui se succèdent dans le temps qui sont transformés chacun en une séquence de signal qui représente le spectre de courte durée.

10. Procédé selon la revendication 9, **caractérisé en ce** que les fenêtres de temps se chevauchent dans le temps.

11. Procédé selon la revendication 10, **caractérisé en ce** que la durée du chevauchement (t1 - t2 ; t6 - t7) est de l'ordre de 5 à 8 % et par exemple de 6.25 % de la durée d'une fenêtre de temps.

**12.** Procédé selon la revendication 9, **caractérisé en ce** que la courbe caractéristique de l'amplitude (WA, WS) des fenêtres de temps est identique côté émetteur et côté récepteur (figure 3).

**13.** Procédé selon la revendication 9, **caractérisé en ce** que la courbe caractéristique de l'amplitude (WA, WS) des blocs a une allure constamment croissante ou décroissante pendant la durée du chevauchement (t1 - t2 : t6 - t7).

**14.** Procédé selon la revendication 12 et/ou 13, **caractérisé en ce** que l'allure de la courbe caractéristique de l'amplitude (WA, WS) pendant la durée du chevauchement est dimensionnée de manière telle que, pendant cette durée, la somme des produits de la courbe caractéristique de l'amplitude (WA, WS) côté émetteur et côté récepteur est égale à 1.

**15.** Procédé selon la revendication 14, **caractérisé en ce** que le flanc décroissant de la courbe caractéristique de l'amplitude a, à la fin d'une fenêtre de temps, une allure cosinusoïdale et le flanc croissant de la courbe caractéristique, au début d'une fenêtre de temps, une allure sinusoïdale.

**16.** Procédé selon la revendication 1, **caractérisé en ce** que respectivement les valeurs des maxima des amplitudes (14, 15, 16, 17, 18) d'un groupe de fréquence sont transmises (figure 4).

**17.** Procédé selon la revendication 9, **caractérisé en ce** qu un bloc est réparti respectivement en plusieurs (32) sous-blocs et, qu'à chaque fois que d'un sous-bloc à l'autre il y a un saut d'amplitude au-dessus d'une certaine valeur (29 dB), les valeurs d'amplitude des sous-blocs précédant dans le temps sont augmentées pour la transmission par un système de compression-expansion (figure 5).

**18.** Procédé selon la revendication 2, **caractérisé en ce** que le spectre est représenté en quantité et phase.

**19.** Procédé pour la transmission d'un signal son dans lequel le signal analogique est représenté en un signal numérique, est transformé avant transmission en un signal qui représente le spectre de courte durée, toute la bande de fréquence étant répartie en plusieurs groupes de fréquence, des fractions de signal dans les groupes de fréquence étant pondérées différemment quant à leur exactitude de représentation, sur la base de lois générales psychoacoustiques, lors du codage du signal à transmettre, et dans lequel le signal codé est transmis et décodé, retransformé et transformé à nouveau en un signal analogique après transmission, **caractérisé en ce** que les quantités transformées sont réparties en groupes de fréquence à partir du maximum respectif au-dessus d'un seuil dans le domaine quantités, que les quantités qui se trouvent dans le même domaine quantités sont transmises comme valeur égale et que les quantités au-dessous du seuil sont mises à zéro.

**20.** Procédé selon la revendication 19, **caractérisé en ce** que la subdivision des domaines quantités dépend du nombre des bits libres disponibles.

Analogsignal a(t)

Fig.1

Fig.2

EP 0 193 143 B1

A.

WA = WS

cos

1

sin

t1   t2               t6    t7               t
     63              960   1023

Abtastwerte

B.

WA · WS

cos²

1

sin²

t1    t2              t6    t7               t

Fig. 3

EP 0 193 143 B1

Fig. 4

| | | | | 0 dB |
|---|---|---|---|---|
| 20 | 21 | | | |
| 22 | 23 | | | 6 dB |
| | | | | 12 dB |
| 24 | | | | 18 dB |
| | | | | 24 dB |

28

6 dB

A1  10 dB

A2  30 dB

A3

27

13  14  15  16  20  21  22  23  24  25  26  17  18  19

f₁ f₂ f₃ f₄ f₅ f₆ f₇ f₈ f₉ f₁₀ f₁₁ f₁₂ f₁₃ f₁₄ f₁₅

f

Fig.5

Fig.6

EP 0 193 143 B1